(19)

Europäisches
Patentamt
European
Patent Office
Office européen
des brevets

(11) **EP 1 834 138 B1**

(12) **EUROPEAN PATENT SPECIFICATION**

(45) Date of publication and mention
of the grant of the patent:
**02.08.2017 Bulletin 2017/31**

(51) Int Cl.:
**F25B 49/02** *(2006.01)*

(21) Application number: **05805065.9**

(86) International application number:
**PCT/IB2005/053184**

(22) Date of filing: **27.09.2005**

(87) International publication number:
**WO 2006/072838 (13.07.2006 Gazette 2006/28)**

(54) **A COOLING DEVICE AND A CONTROL METHOD**

KÜHLVORRICHTUNG UND STEUERVERFAHREN

DISPOSITIF DE REFROIDISSEMENT ET PROCÉDÉ DE COMMANDE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **03.01.2005 TR 200500036**

(43) Date of publication of application:
**19.09.2007 Bulletin 2007/38**

(73) Proprietor: **Arçelik Anonim Sirketi
34950 Istanbul (TR)**

(72) Inventors:
- **ERENAY, Kerem,
Arcelik Anonim Sirketi
Tuzla,
34950 Istanbul (TR)**
- **SOYSAL, Alper,
Arcelik Anonim Sirketi
Tuzla,
34950 Istanbul (TR)**
- **BAYKUT, Alper,
Arcelik Anonim Sirketi
Tuzla,
34950 Istanbul (TR)**
- **TEZDUYAR, Latif,
Arcelik Anonim Sirketi
Tuzla,
34950 Istanbul (TR)**
- **GULDALI, Yalcin,
Arcelik Anonim Sirketi
Tuzla,
34950 Istanbul (TR)**

- **OZKADI, Fatih,
Arcelik Anonim Sirketi
Tuzla,
34950 Istanbul (TR)**
- **SONMEZOZ, Fehmi,
Arcelik Anonim Sirketi
Tuzla,
34950 Istanbul (TR)**

(56) References cited:
EP-A- 0 118 573      EP-A- 0 522 878
EP-A- 0 921 363      US-A- 5 410 230
US-A- 6 134 901      US-A1- 2004 074 247
US-B1- 6 591 622      US-B1- 6 668 571

- PATENT ABSTRACTS OF JAPAN vol. 007, no. 173 (M-232), 30 July 1983 (1983-07-30) -& JP 58 075637 A (TOKYO SHIBAURA DENKI KK), 7 May 1983 (1983-05-07)
- PATENT ABSTRACTS OF JAPAN vol. 2000, no. 11, 3 January 2001 (2001-01-03) -& JP 2000 213847 A (SHARP CORP), 2 August 2000 (2000-08-02)
- PATENT ABSTRACTS OF JAPAN vol. 2003, no. 03, 5 May 2003 (2003-05-05) -& JP 2002 325466 A (TOSHIBA CORP), 8 November 2002 (2002-11-08)
- PATENT ABSTRACTS OF JAPAN vol. 2000, no. 20, 10 July 2001 (2001-07-10) -& JP 2001 066032 A (FUJI ELECTRIC CO LTD), 16 March 2001 (2001-03-16)
- PATENT ABSTRACTS OF JAPAN vol. 017, no. 419 (P-1585), 4 August 1993 (1993-08-04) -& JP 05 080809 A (FUJI ELECTRIC CO LTD), 2 April 1993 (1993-04-02)

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 834 138 B1

- PATENT ABSTRACTS OF JAPAN vol. 2000, no. 10, 17 November 2000 (2000-11-17) -& JP 2000 205723 A (LG ELECTRONICS INC), 28 July 2000 (2000-07-28)

**Description**

This invention relates to a cooling device and a control method thereof which includes a compressor wherein the speed is controlled with respect to the operating conditions.

In cooling devices, while selecting the compressor that is a part of the cooling system, the operating condition limits are taken into account in relation to the type of the climate where the cooling device will be used and accordingly, because hard operating conditions are considered, the capacity of the compressor selected for the conditions stating the energy consumption value of the cooling device may be larger than needed. The fact that the compressor capacity is larger than needed results in an increase in the number of stops and starts and the cyclic losses. In order to eliminate the aforementioned disadvantage, compressor selection is performed with respect to the normal operating conditions which constitute a large part of the life-span of the cooling device and in a situation where the cooling device needs to operate at limits, the compressor speed, namely the number of revolutions of the compressor motor is varied accordingly. In cooling devices utilizing a compressor with variable speed motor, several control algorithms are developed to help determine when the compressor needs to operate at normal speeds and when at higher speeds.

The US 5 410 230 discloses a system for heating or cooling air in a space. The system comprises a thermostat that generates a two state temperature signal which corresponds to the temperature of the air in said space. The motor speed of a compressor is increased or decreased in dependence on the on/off time ratio of the thermostat.

In the United States Patent Document US 5673568, a description is given of an embodiment of a speed pattern for a compressor utilized in an air conditioner the speed pattern of which includes an initial rising mode, a maximum speed mode and a minimum speed mode. The maximum speed is selected considering the operation stopping time period, the last maximum speed and the change in the last maximum speeds.

In the European Patent Document EP 0270474, a description is given of an arrangement wherein the new running speed of the variable speed compressor is determined according to the current and the previous ambient temperatures measured and to the last running speed.

In the United States Patent Document US 5115968, a description is given of a temperature control system utilized generally in cooling/heating devices. The on/off signals of the thermostat, not only determine the running time periods but also are indicative of temperature errors which in turn are used to determine the operating conditions.

In the European Patent Document EP 0921363, a description is given of an arrangement wherein by considering the running speed, the operating time period and the optimum operating time periods of the variable speed compressor, the new running speed after stopping time period is determined. After the variable speed compressor starts to operate, if the thermostat does not send off signals at certain time intervals, the starting speed of the compressor is increases. At the time of start, starting speed is determined according to the previous final speed and the operation stopping time period. If the operating time period of the compressor is less than what is aimed, following the operation stopping time period, the new starting speed is kept below the previous speed and the compressor speed can be increased periodically according to the feedback obtained from the thermostat.

The aim of the present invention is the realization of a cooling device and a control method thereof wherein the speed of the compressor is determined with respect to the running time periods and the operation stopping time periods.

The cooling device and the control method realized in order to attain above mentioned aim of the present invention are illustrated in the attached figures, where:

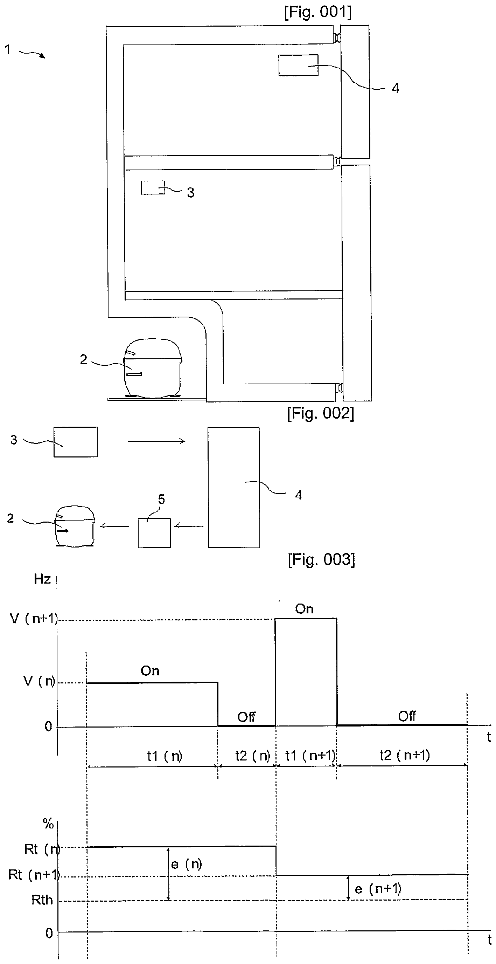

Fig.1 - is a schematic representation of a cooling device.

Fig.2 - is a schematic representation of a compressor, a thermostat and a speed control unit.

Fig.3 - is a graphical representation illustrating that in a cooling device, the target run time ratio is approached by increasing the compressor speed.

Elements shown in figures are numbered as follows:

1. Cooling device
2. Compressor
3. Thermostat
4. Speed control unit
5. Inverter

The cooling device (1) comprises a compressor (2) whereby the refrigeration cycle is performed, a thermostat (3) used to check the temperature inside the cooling device (1) and to direct the sending of "on" and "off" signals to the compressor (2), a speed control unit (4) that calculates the running speed of the compressor (2) (the number of revolutions of the compressor (2) motor) according to the operating conditions, and an inverter (5) whereby it is achieved to operate the compressor (2) at the determined rotational speed by utilizing the information obtained from the speed control unit (4).

In the cooling device (1), the compressor (2) operates until the temperature decreases to a specified value that the thermostat (3) is set to and meanwhile, the running time period (t1) can be measured. After the compressor (2) stops, it is kept inactive until the temperature increases to a certain value that the thermostat (3) is set to and, the stopping time period (t2) can be measured. By using the running time period and the stopping time period (tl, t2) of the compressor (2), the run time ratio (Rt) is determined using to the following equation,

$$Rt = t1 / (t1 + t2)$$

From the aspect of the efficiency of the cooling device (1), it is important to keep the run time ratio (Rt) at a certain level. For that reason, a target run time ratio (Rth) is determined by the manufacturer with the purpose of improving the operating conditions by decreasing the number of stops-starts of the compressor (2) and accordingly the cyclic losses in the cooling device (1) and, the said ratio (Rth) is saved in the speed control unit (4). The target run time ratio (Rth) is determined between 70 % to 100 %, preferably as around 75 %.

The difference between the target run time ratio (Rth) and an run time ratio (Rt) calculated inside an arbitrary time period during the operation of the cooling device (1), is defined as the run time ratio deviation (e = Rth - Rt).

In the control method of the cooling device (1), following symbols are used while an arbitrary (final) refrigeration cycle is denoted as (n) :

V(n) : is the rotational speed of the compressor(2) measured in cycle (n)
t1(n) : is the running time period of the compressor(2) in cycle (n)
t2(n) : is the stopping time period of the compressor (2) in cycle (n)
Rt(n) : is the run time ratio in cycle (n), Rt(n) = t1(n) / (t1(n) + t2(n))
e(n) : is the run time ratio deviation in cycle (n), e(n) = Rth - Rt(n)

In the speed control unit (4), the run time ratio based on the running time period (t1(n)) and the stopping time period (t2(n)) of the compressor (2) that are determined in the last cycle (n) with respect to the on and off signals of the thermostat (3), is calculated by using the following equation;

$$Rt(n) = t1(n) / (t1(n) + t2(n)) \ldots \ldots \ldots \ldots \ldots \ldots \ldots \ldots \ldots \ldots \ldots \ldots \ldots (Eq.1)$$

and in the next cycle (n+1), the compressor (2) is directed to operate at a new speed (V(n+1)) by considering the information concerning the run time ratio (Rt(n)), the rotational speed V(n) and the target run time ratio (Rth) after measuring the rotational speed (V(n)) in the last cycle (n).

In the embodiment in accordance with the present invention, the speed control unit (4) measures the rotational speed (V(n)) of the compressor (2) in the final cycle (n) and, by considering the difference (e(n), e(n-1)) between the target run time ratio (Rth) and the run time ratios (Rt(n), Rt(n-1)) in the final (n) and the preceding (n-1) cycles, it determines the speed (V(n+1)) of the compressor (2) in the following cycle (n+1) by the following equation;

$$V(n+1) = f ( V(n), e(n), e(n–1)) \ldots \ldots \ldots \ldots \ldots \ldots \ldots \ldots \ldots \ldots \ldots \ldots (Eq.2)$$

In this equation, while calculating the speed (V(n+1)) of the compressor (2), the run time ratio deviations (e(n), e(n-1)) are checked by being given as feedback to the system and, it is attempted to approximate the run time ratios (Rt) to the target run time ratio (Rth). Accordingly, the above equation (Eq.2) is expressed more explicitly as the equation given below (Eq.3).

$$V(n+1) = V(n) – (K1 \text{ x } e(n) – K2 \text{ x } e(n–1)) \ldots \ldots \ldots \ldots \ldots \ldots \ldots \ldots \ldots (Eq.3)$$

The coefficients K1 and K2 in Eq.3 are gain coefficients determined experimentally by the manufacturer and used to set up the necessary speed of change in the compressor (2) speed to reach the target run time ratio (Rth).

In the embodiment according to the present invention,

Kp : is the proportional gain coefficient whereby the speed of the compressor (2) is varied proportional to the run time ratio deviations (e(n), e(n-1)).

Ki : is the integral gain coefficient used eliminate the deviations which could not be removed by the proportional gain coefficient (Kp); while,

$$K1 = Kp + Ki$$

$$K2 = Kp - Ki$$

wherein K1 and K2 are positive and K1 is greater than K2 (K1 > K2).

The coefficients K1 and K2, determined by the manufacturer, can be changed in relation to the frequency of the opening and closing of the door of the cooling device (1) and to the varying ambient temperature.

The compressor (2) speed V(n) at the beginning of every cycle is kept constant during the running time period (t1(n)) of the compressor (2).

The control method for the cooling device (1) comprises the following steps :

- The running time period (t1(n)) of the compressor (2) in cycle (n) is measured.
- The speed (V(n)) of the compressor (2) is measured.
- The stopping time (t2(n)) of the compressor (2) is measured.
- The run time ratio Rt(n) = t1(n) / (t1(n) + t2(n)) is calculated.
- The run time ratio deviation e(n) = Rth - Rt(n) is calculated.
- The precalculated run time ratio deviation e(n-1) = Rth - Rt(n-1) in the previous cycle (n-1) is taken.
- By considering the final cycle (n) and the preceding one (n-1), the speed (V(n+1)) of the compressor (2) in the following cycle (n+1) is calculated by using the equation

$$V(n+1) = V(n) - (K1 \ x \ e(n) - K2 \ x \ e(n-1)).$$

In one embodiment of the control method for the cooling device (1), given the below figures:

V(n) = 50 Hz
Rth = 75
Rt(n) = 77
Rt(n-1) = 76
K1 = 2
K2 = 1
V(n+1) is calculated as V(n+1) = 50 - (2 x (-2) - 1 x (-1)) = 53.

If the actual run time ratio (Rt(n)) is larger than the target run time ratio (Rth), the speed (V(n)) of the compressor (2) increases in order to reach the target run time ratio (Rth). As the compressor (2) speed (V(n)) increases, the running time period (t1(n)) of the compressor (2) decreases, the stopping time period (t2(n)) increases and accordingly, the actual run time ratio (Rt(n)) decreases and thus approaches the target run time ratio (Rth).

In another embodiment of the control method for the cooling device (1), given the below figures:

V(n) = 60 Hz
Rth = 75
Rt(n) = 70
Rt(n-1) = 73
K1 = 2
K2 = 1
V(n+1) is calculated as V(n+1) = 60 - (2 x (5) - 1 x (2)) = 52.

If the actual run time ratio (Rt(n)) is smaller than the target run time ratio (Rth), the speed (V(n)) of the compressor (2) decreases in order to reach the target run time ratio (Rth). As the compressor (2) speed (V(n)) decreases, the running time period (t1(n)) of the compressor (2) increases, the stopping time period (t2(n)) decreases and accordingly, the actual run time ratio (Rt(n)) increases and thus approaches the target run time ratio (Rth).

In a situation where it is necessary to decrease the speed of the compressor (2) in order to reach a determined target run time ratio (Rth) but it is not possible to reduce the speed of the compressor (2) below a certain limit value, the compressor (2) operates at the minimum speed, independent of the target run time ratio (Rth).

In a situation where it is necessary to increase the speed of the compressor (2) in order to reach a determined target run time ratio (Rth) but it is not possible to increase the speed of the compressor (2) above a certain limit value, the compressor (2) operates at the maximum speed, independent of the target run time ratio (Rth).

If the running time period (t1(n)) of the compressor (2) exceeds the determined limit period, the run time ratio (Rt(n)) increases in order to bring a restriction. To increase the run time ratio (Rt(n)), the speed V(n) is increased and thereby in a short period of time, the compressor (2) finishes the running time period (t1(n)) and stops.

With respect to the speed (V(n+1)) of the compressor (2) calculated considering the target run time ratio (Rth) and the actual run time ratio (Rt(n)), the speed control unit (4) determines whether the compressor (2) will be powered by utilizing the inverter (7) or directly by the network voltage by deactivating the inverter (7). For example, if it is necessary to operate the compressor (2) at a low speed, it is powered by the network voltage and thus the inverter (7) is not used unnecessarily.

The speed control unit (4) determines the compressor (2) speed (V(n+1)) suitable for the operating conditions of the cooling device (1) by means of a PI (proportional - integral) control method defined as a flexible and simple discrete time equation without the need of complex algorithms.

**Claims**

1. A cooling device (1) comprising:

   a compressor (2) whereby the refrigeration cycle is performed;
   a thermostat (3) used to check the temperature inside the cooling device (1) and to direct the sending of on and off signals to the compressor (2),
   a speed control unit (4) which calculates the run time ratio based on the running time period (t1 (n)) and the stopping time period (t2(n)) of the compressor (2) that are determined in a final cycle (n) with respect to the on and off signals of the thermostat (3), by using the equation

$$Rt(n) = t1(n) / (t1(n) + t2(n))$$

   and also calculates the compressor (2) speed (V(n+1)) in the next cycle (n+1) by considering the information concerning the run time ratio (Rt(n)) and the compressor (2) speed (V(n)), after measuring the compressor (2) speed (V(n)) in the last cycle (n),
   **characterized in that**,
   by using gain coefficients (K1, K2) with K1 = Kp + Ki and K2 = Kp - Ki, calculated in relation to a proportional gain coefficient (Kp) whereby the speed of the compressor (2) is varied proportional to run time ratio deviations (e(n), e(n-1)), wherein the run time deviation e(n) = Rth - Rt(n) with respect to a target run time ratio Rth, and an integral gain coefficient (Ki) used to eliminate the deviations which could not be removed by the proportional gain coefficient (Kp),
   the speed (V(n+1)) of the compressor (2) in the next cycle (n+1) is calculated by utilizing the equation

$$V(n+1) = V(n) - (K1 \times e(n) - K2 \times e(n-1)),$$

   using the difference (e(n), e(n-1)) between the target run time ratio (Rth) and the run time ratios (Rt(n), Rt(n-1)) in the last (n) and one previous (n-1) cycles.

2. A cooling device (1) as described in Claim 1, comprising an inverter (5) whereby it is achieved to operate the compressor (2) at the determined speed by utilizing the information obtained from the speed control unit (4), and **characterized by** a speed control unit (4) wherein with respect to the speed (V(n+1)) of the compressor (2) calculated considering the target run time ratio (Rth) and the actual run time ratio (Rt(n)), it (4) is determined whether the compressor (2) will be powered by utilizing the inverter (7) or directly by the network voltage by deactivating the inverter (7).

3. A control method for a cooling device (1) as described in any of the above Claims, incorporating the following steps:

Measuring the running time period (t1 (n)) of the compressor (2) in cycle (n);
Measuring the speed (V(n)) of the compressor (2);
Measuring the stopping time (t2(n)) of the compressor (2);
Calculating the run time ratio Rt(n) = t1 (n) / (t1 (n) + t2(n));
Calculating the run time ratio deviation e(n) = Rth - Rt(n) with respect to a target run time ratio (Rth);
By considering a final cycle (n) and the preceding cycle (n-1), calculating the speed (V(n+1)) of the compressor (2) in the following cycle (n+1) by using the equation

$$V(n+1) = V(n) - (K1 \times e(n) - K2 \times e(n-1))$$

with the gain coefficients (K1, K2) with K1 = Kp + Ki and K2 = Kp - Ki, calculated in relation to a proportional gain coefficient (Kp) and an integral gain coefficient (Ki).

**Patentansprüche**

1. Ein Kühlgerät (1) bestehend aus:

einem Kompressor (2) wo Kältekreislauf durchgeführt wird;
einem Thermostat (3), die dafür verwendet wird, um die Temperatur im Kühlgerät (1) zu kontrollieren und die Sendung von on und off Signale zum Kompressor (2) zu lenken,
einer Geschwindigkeitskontrolleinheit (4), die das Laufzeitverhältnis anhand von Betriebszeit (t1 (n)) und Anhaltzeit (t2(n)) des Kompressors (2) berechnet, die in einem Finalzyklus (n) entsprechend von on und off Signale des Thermostats (3) festgestellt werden, durch Verwendung der Gleichung

$$Rt(n) = t1(n) / (t1(n) + t2(n))$$

und berechnet auch die Geschwindigkeit (V(n+1)) des Kompressors (2) im nächsten Zyklus (n+1) mit Betrachtung der Information betreffend Laufzeitverhältnis (Rt(n)) und Geschwindigkeit (V(n)) des Kompressors (2), nach Ermessung der Geschwindigkeit (V(n)) des Kompressors (2) im letzten Zyklus (n),
**dadurch gekennzeichnet, daß**
mit Verwendung von Verstärkungskoeffizienten (K1, K2) mit K1 =Kp + Ki und K2 = Kp - Ki, berechnet in Bezug auf einem proportionalen VerstärkungsKoeffizient (Kp), wobei die Geschwindigkeit des Kompressors (2) sich proportional zur Laufzeitabweichungen (e(n), e(n-1)) verändert, wobei die Laufzeitabweichung e(n) = Rth - Rt(n) bezüglich zu einem Ziellaufzeitverhältnis Rth, und einem vollständigen Verstärkungskoeffizient (Ki) verwendet wird, um die Abweichungen zu beseitigen, die mit proportionaler Verstärkungskoeffizient (Kp) nicht entfernt werden können,
die Geschwindigkeit (V(n+1)) des Kompressors (2) im nächsten Zyklus (n+1) ist berechnet, durch Verwendung der Gleichung

$$V(n+1) = V(n) - (K1 \times e(n) - K2 \times e(n-1)),$$

mit Anwendung der Differenz (e(n), e(n-1)) zwischen Ziellaufzeitverhältnis (Rth) und Laufzeitverhältnisse (Rt(n), Rt(n-1)) im letzten (n) und vorigen (n-1) Zyklus.

2. Ein Kühlgerät (1) wie beschrieben in Anspruch 1, bestehend aus einem Umformer (5), wobei erzielt ist, den Kompressor (2) an festgestellter Geschwindigkeit durch Verwendung der Information, die von Geschwindigkeitskontrolleinheit (4) erhalten ist, zu operieren und
**dadurch gekennzeichnet, daß** mit einer Geschwindigkeitskontrolleinheit (4), wobei entsprechend von Geschwindigkeit (V(n+1)) des Kompressors (2) berechnet wird, mit Betrachtung von Ziellaufzeitverhältnis (Rth) und aktuelles Laufzeitverhältnis (Rt(n)) ist (4) festgestellt, ob der Kompressor (2) durch Verwendung des Umformers (7) verstärkt wird oder unmittelbar durch Netzspannung mit Abschaltung des Umformers (7).

3. Eine Kontrollmethode für ein Kühlgerät (1), beschrieben nach den vorhergehenden Ansprüche, besteht von folgenden Schritten:

> Messung der Betriebszeit (t1 (n)) des Kompressors (2) im Zyklus (n);
> Messung der Geschwindigkeit (V(n)) des Kompressors (2);
> Messung der Anhaltzeit (t2(n)) des Kompressors (2);
> Berechnung des Laufzeitverhältnisses Rt(n) = t1 (n) / (t1 (n) + t2(n));
> Berechnung der Laufzeitabweichung e(n) = Rth - Rt(n) bezüglich zu einem Ziellaufzeitverhältnis (Rth);
> Mit Betrachtung von einem Finalzyklus (n) und vorhergehenden Zyklus (n-1),
> Berechnung der Geschwindigkeit (V(n+1)) des Kompressors (2) im nächsten Zyklus (n+1) durch Verwendung der Gleichung

$$V(n+1) = V(n) - (K1 \times e(n) - K2 \times e(n-1))$$

> mit Verstärkungskoeffizienten (K1, K2) mit K1 = Kp + Ki und K2 = Kp - Ki, berechnet in Bezug auf einem proportionalen Verstärkungskoeffizient (Kp) und einem vollständigen Verstärkungskoeffizient (Ki).

## Revendications

1. Un dispositif de refroidissement (1) comprenant:

> un compresseur (2) dans lequel le cycle de réfrigération est effectué;
> un thermostat (3) utilisé pour vérifier la température à l'intérieur du dispositif de refroidissement (1) et pour diriger l'envoi des signaux de marche et arrêt vers le compresseur (2),
> une unité de commande de vitesse (4) qui calcule le rapport de temps de fonctionnement basé sur la durée de fonctionnement (t1 (n)) et la durée de temps d'arrêt (t2 (n)) du compresseur (2) qui sont déterminés dans un cycle final (n) par rapport aux signaux d'activation et de désactivation du thermostat (3), en utilisant l'équation

$$Rt(n) = t1(n) / (t1(n) + t2(n))$$

> et calcule également la vitesse du compresseur (2) (V (n + 1)) dans le cycle suivant (n + 1) en considérant les informations concernant le rapport de temps de fonctionnement (Rt (n)) et la vitesse du compresseur (2) (V (n)), après avoir mesuré la vitesse du compresseur (2) (V (n)) dans le dernier cycle (n),
> **caractérisé en ce que,**
> en utilisant des coefficients de gain (K1, K2) avec K1 = Kp + Ki et K2 = Kp-Ki, calculés par rapport à un coefficient de gain proportionnel (Kp), de sorte que la vitesse du compresseur (2) varie proportionnellement aux déviations du rapport de temps de fonctionnement (e (n), e (n-1)), dans lequel la deviation du temps de fonctionnement e (n) = Rth-Rt (n) par rapport à un rapport de temps de fonctionnement cible Rth et un coefficient de gain intégral (Ki) utilisé pour éliminer les déviations qui n'ont pas pu être supprimés par le coefficient de gain proportionnel (Kp), la vitesse (V(n+1)) du compresseur (2) dans le cycle suivant (n+1) est calculée en utilisant l'équation

$$V(n+1) = V(n) - (K1 \times e(n) - K2 \times e(n-1)),$$

> en utilisant la différence (e(n), e(n-1)) entre le rapport de temps de fonctionnement cible (Rth) et les rapports de temps de fonctionnement (Rt (n), Rt (n-1)) dans le dernier (n) et un cycle précédent (n-1).

2. Un dispositif de refroidissement (1) selon la revendication 1, comprenant un convertisseur (5), selon le quel il est réalisé de faire fonctionner le compresseur (2) à la vitesse déterminée en utilisant les informations obtenues à partir de l'unité de commande de vitesse (4) et
**caractérisé par** une unité de commande de vitesse (4) dans laquelle, par rapport à la vitesse (V(n+1)) du compresseur (2) calculée en fonction du rapport de temps de fonctionnement cible (Rth) et du rapport de temps de fonctionnement réel (Rt(n)), il (4) est déterminé si le compresseur (2) sera alimenté en utilisant le convertisseur (7) ou directement par la tension du réseau en désactivant le convertisseur (7).

3.  Un procédé de commande pour un dispositif de refroidissement (1) selon l'une quelconque des revendications précédentes, comprenant les étapes suivantes:

    Mesurer la durée de fonctionnement (t1 (n)) du compresseur (2) dans le cycle (n);
    Mesurer la vitesse (V(n)) du compresseur (2);
    Mesurer le temps d'arrêt (t2(n)) du compresseur (2);
    Calculer le rapport du temps de fonctionnement $Rt(n) = t1(n) / (t1(n) + t2(n))$;
    Calculer la déviation du rapport de temps de fonctionnement $e(n) = Rth-Rt(n)$ par rapport à un rapport de temps de fonctionnement cible (Rth);
    En considérant un cycle final (n) et le cycle précédent (n-1), calculer la vitesse (V(n +1)) du compresseur (2) dans le cycle suivant (n + 1) en utilisant l'équation

$$V(n+1) = V(n) - (K1 \times e(n) - K2 \times e(n-1))$$

    avec les coefficients de gain (K1, K2) avec $K1 = Kp + Ki$ et $K2 = Kp-Ki$, calculé par rapport à un coefficient de gain proportionnel (Kp) et un coefficient de gain intégral (Ki).

[Fig. 001]

1

4

3

2

[Fig. 002]

3 → 4

5

2 ← 5 ← 4

[Fig. 003]

Hz

$V(n+1)$ — — — — — — — — — — On

$V(n)$ — — — On

0 — Off — — Off — — — — — t

t1 (n) | t2 (n) | t1 (n+1) | t2 (n+1)

%

$Rt(n)$ ⋯⋯

$e(n)$

$Rt(n+1)$ ⋯⋯

$e(n+1)$

Rth — — — —

0 — — — — — — — — — — — — t

**EP 1 834 138 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5410230 A
- US 5673568 A
- EP 0270474 A
- US 5115968 A
- EP 0921363 A